# EUROPEAN PATENT SPECIFICATION

(11) **EP 0 447 600 B1**
(45) Date of publication and mention of the grant of the patent: **11.10.1995**
(21) Application number: 90105601.0
(22) Date of filing: 23.03.1990
(51) Int. Cl.: G02B 3/08, F21V 5/00, F21Q 3/00

(54) **A cylindrical lens and a manufacturing method for the same**
Zylinderförmige Linse und dazugehöriges Herstellungsverfahren
Lentille cylindrique et méthode de fabrication pour cette lentille

(43) Date of publication of application: 25.09.1991
(73) Proprietor: ZENI LITE BUOY CO., LTD., Ikeda-shi, Osaka (JP)
(72) Inventor: Nagamachi, Koichi, c/o Zeni Lite Buoy Co., Ltd., Ikeda-shi, Osaka (JP)
(74) Representative: Glawe, Delfs, Moll & Partner

(56) References cited:
- EP-A- 0 216 562
- DE-A- 2 917 743
- DE-C- 944 633
- PATENT ABSTRACTS OF JAPAN, vol. 14, no. 289 (P-1065)[4232], 21st June 1990; & JP-A-2 89 002

## Description

### Field of Industrial Application

The present invention relates to an improvement made to a cylindrical lens for a beacon that converges beams of light onto a horizontal surface.

### Prior Art

A cylindrical lens has been widely used for the lighting of waterways. Having a light source in the centre, the cylindrical lens is designed to have the focal point in the centre. Emission of light passes through the lens and converges on parallel beams of light at the height of the lens.

Different from a photographic lens or magnifying lens, resolution or distortional aberration are not a problem for the cylindrical lens used for this purpose, which only pursues the convergence efficiency of light-emmission energy.

From DE-A-2 917 743 a flat fresnel lens is known, having the optical properties of a cylindrical lens, made of a rollable thin film. EP-A- 0 216 562 discloses a thin flexible fresnel lens.

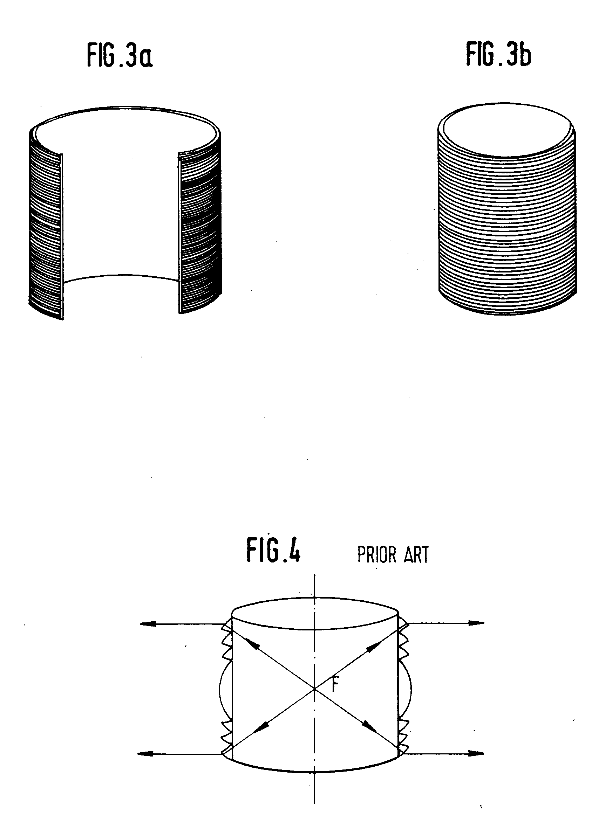

In order to raise the luminous intensity, the numerical aperture of the lens can be increased, but the diameter of the lens is determined by the focal distance, and in order to increase the numerical aperture, the lens height must be raised. However, the incidence angle from the light source to the lens is limited to a maximum of ±60° - 65°. On the other hand, in order to reduce loss of light through the lens, the lens must be thin. From these condition, a fresnel-lens-type cylindrical lens is used. A schematic drawing is shown in Figure 4.

In order to make the thickness of the cylindrical fresnel lens thin, the lens consists of a main lens part and a multi-layered annular part provided above and below it, the light-emitting plane of which corresponds to the lens surface and consists of a curbed plane requiring precision.

### Problem to be Solved by the Invention

Cast glass has been used as a material for a cylindrical fresnel lens for waterway beacon lighting equipment, but because of various reasons such as mold precision, casting, mold releasing and cooling process, it was impossible to make a high performance lens. Recently, high performance cast cylindrical lenses can be made using plastic injection molding method. However, there is a limit to what can be made by the injection molding method regarding the thickness of a cylindrical lens. Either way, molds for casting require precision and are expensive. In the case of a plastic lens, a certain volume had to be continuously made in order to stabilise the quality, thereby resulting in high manufacturing cost.
Demand for waterway beacon lenses is extremely small compared with general commodities. The combination of special attributes of the lens, expensive mold, limited production volume and severe performance requirements made development of a new lens for a demanded purpose very difficult

### Method of Solving the Problem

The thinner the lens, the less light is lost through the lens. Therefore, the smaller the pitch between the rings of the fresnel lens, the thinner the lens can be made. Recent improvement in machining precision of molds and progress in plastic materials made a pitch of 0.1 mm possible. Also, if the pitch is made small, sufficient precision can be obtained even if the vertical section of the light-emitting plane is processed linearly, i.e., in a prism shape, instead of a curved line, which makes machining of a mold is very easy.

The present invention concerns a cylindrical fresnel lens and a method of manufacturing the same as defined in claims 1 and 7, respectively. Instead of plastic injection molding, this method employs a mold for a small-pitch thin linear lens which is a plane development of a cylindrical fresnel lens, and a thin flexible plastic plate is heated and pressed to make a thin-plate-shaped linear lens, which is rolled so that the fresnel centre line forms a horizontal ring, thereby forming a cylindrical lens made of a cylinder or head-cut-off cone.

A flat metal plate for the mold is machined by a milling machine or a thin metal plate for the mold is wound around the circumference of the cylinder for lathe machining to make a fresnel plane, which is taken off and spread into a flat plate, and then heated and pressed onto a flexible transparent resin film to form a fine prism-shaped linear fresnel plane. If the thin metal plate for mold is wound around the head-cut-off cone and machined by lathe and spread into a flat plate, it becomes a flat mold for a cylindrical lens of a head-cut-off cone.

### Function

Because a fine prism-shaped fresnel lens is used for a cylindrical fresnel lens, the emitting plane can have a linear vertical section, making the lens design easy. Molds can be easily machined by numerically controlled milling machines or lathes, and therefore thin flexible linear lenses can be easily formed, which are bent to make thin cylindrical fresnel lenses.

As described above, this thin cylindrical lens facilitates mold manufacture and lens formation, making it economical and easy to produce a new lens with a high transmission factor.

### Embodiment

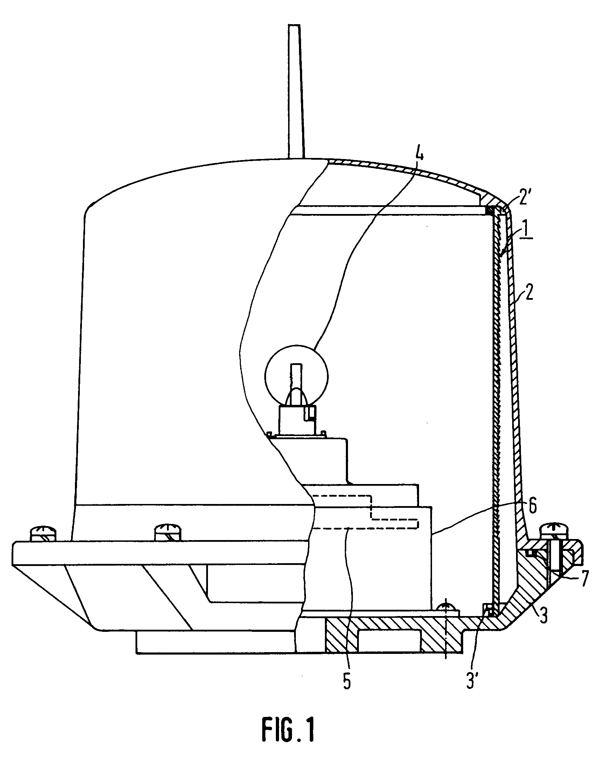

Fig. 1 is a partial front view of a beacon lighting equipment using a cylindrical lens of the present invention, in which (1) is a cylindrical lens, (2) is a cover and (3) is a cast flange which supports the lighting equipment (6) supporting a bulb (4) and incorporates a flashing circuit (5). The cover (2) and the flange (3) are provided with supporting pieces (2′) and (3′) that support the cylindrical lens (1). (7) is the sealing to keep the device watertight. The flange (3) is linked to the beacon body that holds a power source battery. Beams of light emitted from the bulb (4) are converged to non-directional horizontal beams of light by passing through the cylindrical lens (1) which is very thin, therefore reducing transmission loss to a minimum.

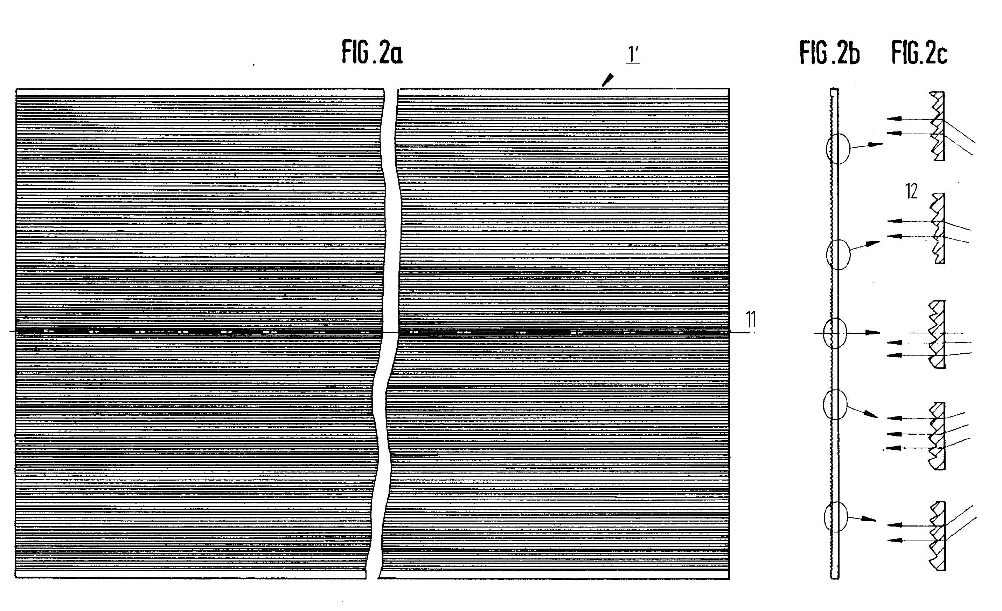

Fig. 2a is plan view of a linear fresnel lens (1′) made of a fine prism-shaped linear fresnel lens surface formed on the transparent resin film of a flexible thin plate, Fig. 2b is the side view, and Fig. 2c is the enlarged partial view. The arrows show the convergence of beams of light with horizontal beams of light after passing through the lens. (11) is the fresnel centre line, and (12) is the linear light-emitting surface of the lens.

Fig. 3a shows the process of rolling the linear fresnel lens (1′) in which the fresnel centre line forms a horizontal ring, and Fig. 3b is a diagonal view showing the cylindrical lens which is made by completely rolling the above and matching the edges.

This method of manufacture allows the fresnel surface to be easily formed on either the outer or inner surface, although formation on the inner surface requires a different lens design. With a conventional cylindrical lens, direct formation of a fresnel surface on the inside of a cover was impossible because it was difficult to remove the mold, but by the method outlined above, a cylindrical lens with an inner fresnel lens is easily produced by adhering a fresnel surface onto the inside of the lens cover or to a transparent cylinder. Also, by supporting the fresnel inside the cover as shown in Fig. 1, no force is applied to the lens and therefore the lens can be made as thin as possible, resulting in a high transmission factor.

In the above embodiment, the focus of the lens is in the centre of the cylindrical lens, but when using an annular light source, e.g., a ring-shaped fluorescent light, a cylindrical lens with an annular focal line is necessary, in which case the roll diameter can simply be made larger.

### Effect of the Invention

The present invention provides a cylindrical lens which is much thinner, easier to produce, more economical and has a higher light transmission factor than conventional cylindrical lenses made by injection molding using an expensive metal mold, therefore, enabling cylindrical lenses suited to novel applications to be easily developed.

### BRIEF DESCRIPTION OF DRAWINGS

Fig. 1 is a partially cut-off front view of the lighting equipment for beacon equipped with a cylindrical lens produced as outlined above, Fig. 2a is a plan view of the linear lens, Fig. 2b is the side view and Fig. 2c is an enlarged partial view of the arrowed sections. Fig. 3a shows the process of rolling thin plate linear fresnel lenses into a cylinder, and Fig. 3b is a diagonal view of a completely rolled cylinder. Fig. 4 is a schematic view of a conventional fresnel lens.
1...Cylindrical lens, 2...cover, 3...flange, 4...bulb, 1′...linear fresnel lens, 11...centre line, 12...light-emitting surface of the lens.

## Claims

1. A cylindrical or frustroconical fresnel lens comprising a thin flexible plate of transparent material which has formed thereon a linear fresnel lens having linear refractive prisms on both sides of a fresnel centre line (11), said thin flexible plate (1) being bent to cylindrical or frustroconical shape with the fresnel centre line (11) forming a horizontal ring, and means (2′, 3′) for permanently holding the thin flexible plate in said bent cylindrical or frustroconical shape.

2. A beacon lighting equipmenp having a cylindrical or frustroconical fresnel lens as defined in claim 1, comprising a housing (3) having a transparent outer cover (2) and holding means (2′, 3′) holding said thin flexible plate (1) in its bent cylindrical or frustroconical shape inside the housing.

3. A beacon lighting equipment as claimed in claim 2, wherein said holding means comprise annular supporting pieces (2′, 3′) supporting the upper and lower edge of the bent thin flexible plate (1).

4. A beacon lighting equipment as claimed in claim 2, wherein said thin flexible plate (1) is adhered to the inside of the transparent outer cover (2) or to a separate transparent cylinder.

5. A beacon lighting equipment according to one of claims 2 to 4, wherein the focus of the cylindrical fresnel lens (1) is at the center of the cylinder and a light source (4) is located in said focus.

6. A beacon lighting equipment as claimed in one of claims 2 to 4, wherein the focus of the cylindrical fresnel lens (1) is annular and an annular light source is located in said annular focus.

7. A method of manufacturing a cylindrical or frustroconical fresnel lens, comprising the steps of
- forming a thin transparent flexible plate with a linear fresnel lens pattern having linear refractive prisms on both sides of a fresnel centre line,
- bending the thin flexible plate to a cylindrical or frustroconical shape so that the fresnel centre line forms a horizontal ring,
- and permanently holding the thin flexible plate in the bent cylindrical or frustroconical shape.

## Patentansprüche

1. Zylindrische oder kegelstumpfförmige Fresnellinse, umfassend eine dünne flexible Platte aus transparentem Material, auf der eine lineare Fresnellinse mit beiderseits einer Fresnel-Mittellinie (11) angeordneten geradlinigen brechenden Prismen geformt ist, wobei die dünne flexible Platte (1) zu einer zylindrischen oder kegelstumpfförmigen Form gebogen ist und die Fesnel-Mittellinie (11) dabei einen horizontalen Ring bildet, und mit Mitteln (2′, 3′) zum ständigen Halten der dünnen flexiblen Platte in der gebogenen zylindrischen oder kegelstumpfförmigen Form.

2. Leuchtfeuer-Einrichtung mit einer zylindrischen oder kegelstumpfförmigen Fresnellinse nach Anspruch 1, mit einem Gehäuse (3) mit einer transparenten äußeren Abdeckung (2) und Haltemitteln (2′, 3′), die die dünne flexible Platte (1) in ihrer gebogenen zylindrischen oder kegelstumpfförmigen Form innerhalb des Gehäuses halten.

3. Leuchtfeuer-Einrichtung nach Anspruch 2, bei der die Haltemittel ringförmige Abstützstücke (2′, 3′) umfassen, die die obere und untere Kante der gebogenen dünnen flexiblen Platte (1) abstützen.

4. Leuchtfeuer-Einrichtung nach Anspruch 2, bei der die dünne flexible Platte (1) an der Innenseite der transparenten äußeren Abdeckung (2) oder an einem separaten transparenten Zylinder zur Anlage gebracht ist.

5. Leuchtfeuer-Einrichtung nach einem der Ansprüche 2 bis 4, bei der der Focus der zylindrischen Fresnellinse (1) im Zentrum des Zylinders liegt und eine Lichtquelle (4) in dem Focus angeordnet ist.

6. Leuchtfeuer-Einrichtung nach einem der Ansprüche 2 bis 4, bei der der Focus der zylindrischen Fresnellinse (1) ringförmig ist und eine ringförmige Lichtquelle in dem ringförmigen Focus angeordnet ist.

7. Verfahren zur Herstellung einer zylindrischen oder kegelstumpfförmigen Fresnellinse, mit den Schritten
- Formen einer dünnen transparenten flexiblen Platte mit einem linearen Fesnel-Linsenmuster, das beiderseits einer Fresnel-Mittellinie geradlinige brechende Prismen aufweist,
- Biegen der dünnen flexiblen Platte zu einer zylindrischen oder kegelstumpfförmigen Form, so daß die Fesnel-Mittellinie einen horizontalen Ring bildet,
- und ständiges Halten der dünnen flexiblen Platte in der gebogenen zylindrischen oder kegelstumpfförmigen Form.

## Revendications

1. Lentille de Fresnel cylindrique ou tronconique comportant une plaque mince et flexible en matière transparente sur laquelle est formée une lentille de Fresnel linéaire ayant des prismes réfringents linéaires sur les deux côtés d'un axe central (11) de Fresnel, ladite plaque mince et flexible étant courbée en une feuille cylindrique ou tronconique de façon que l'axe central (11) de Fresnel forme un anneau horizontal, et des moyens (2′, 3′) pour maintenir de façon permanente la plaque mince et flexible dans ladite forme courbée cylindrique ou tronconique.

2. Equipement d'éclairage d'une balise ayant une lentille de Fresnel cylindrique ou tronconique comme défini dans la revendication 1, comportant un corps (3) ayant un capot extérieur transparent (2) et des moyens (2′, 3′) de maintien maintenant ladite plaque mince et flexible (1) dans sa forme courbée cylindrique ou tronconique à l'intérieur du corps.

3. Equipement d'éclairage de balise selon la revendication 2, dans lequel lesdits moyens de maintien comprennent des pièces annulaires (2′, 3′) de support supportant les bords supérieur et inférieur de la plaque courbée, mince et flexible (1).

4. Equipement d'éclairage de balise selon la revendication 2, dans lequel ladite plaque mince et flexible (1) est collée à l'intérieur du capot extérieur transparent (2) ou à un cylindre transparent séparé.

5. Equipement d'éclairage de balise selon l'une des revendications 2 à 4, dans lequel le foyer de la lentille de Fresnel cylindrique (1) est au centre du cylindre et une source (4) de lumière est placée dans ledit foyer.

6. Equipement d'éclairage de balise selon l'une des revendications 2 à 4, dans lequel le foyer de la lentille de Fresnel cylindrique (1) est annulaire et une source annulaire de lumière est placée dans ledit foyer annulaire.

7. Procédé de fabrication d'une lentille de Fresnel cylindrique ou tronconique, comprenant les étapes qui consistent
- à former une plaque mince, transparente et flexible ayant une configuration de lentille de Fresnel linéaire comportant des prismes réfringents linéaires sur les deux côtés d'un axe central de Fresnel,
- à courber la plaque mince et flexible en une forme cylindrique ou tronconique afin que l'axe central de Fresnel forme un anneau horizontal,
- et à maintenir de façon permanente la plaque mince et flexible dans la forme courbée cylindrique ou tronconique.
